Europäisches Patentamt

European Patent Office

Office européen des brevets

(11) Numéro de publication: **0 203 850 B1**

(12) **FASCICULE DE BREVET EUROPEEN**

(45) Date de publication de fascicule du brevet:
**18.12.91**

(21) Numéro de dépôt: **86401044.2**

(22) Date de dépôt: **15.05.86**

(51) Int. Cl.⁵: **B60R 25/02**

(54) Dispositif de solidarisation ou de désolidarisation rapide, à des fins d'anti-vol du volant et de la colonne de direction d'un véhicule automobile.

(30) Priorité: **15.05.85 FR 8507408**

(43) Date de publication de la demande:
**03.12.86 Bulletin 86/49**

(45) Mention de la délivrance du brevet:
**18.12.91 Bulletin 91/51**

(84) Etats contractants désignés:
**AT BE CH DE GB IT LI LU NL SE**

(56) Documents cités:
**EP-A- 0 008 308**
**EP-A- 0 162 986**
**FR-A- 2 545 431**
**US-A- 1 809 765**

(73) Titulaire: **Malvy, Michel**
**242 Avenue de Stalingrad**
**F-94500 Champigny(FR)**

(72) Inventeur: **Malvy, Michel**
**242 Avenue de Stalingrad**
**F-94500 Champigny(FR)**
Inventeur: **Jalabert, Pierre**
**27 Route des Pyrénéés**
**F-11190 Couiza(FR)**

(74) Mandataire: **Gorree, Jean-Michel et al**
**Cabinet Plasseraud 84, rue d'Amsterdam**
**F-75009 Paris(FR)**

Rank Xerox (UK) Business Services

# Description

La présente invention vise des perfectionnements apportés à un dispositif de solidarisation ou de désolidarisation rapide, à des fins d'anti-vol, du volant et de la colonne de direction d'un véhicule automobile, comportant :
- une embase solidaire en rotation de la colonne de direction,
- une pièce de liaison intermédiaire,
- une platine solidaire en rotation du volant,
- des premiers moyens d'accouplement en rotation, par emboîtement rapide, prévus entre l'embase et la pièce de liaison pour accoupler en rotation ladite embase et ladite pièce de liaison,
- des seconds moyens d'accouplement en rotation, par emboîtement rapide, prévus entre la pièce de liaison et la platine pour accoupler en rotation ladite pièce de liaison et ladite platine, et
- des moyens d'assemblage amovibles pour maintenir assemblées axialement l'embase, la pièce de liaison et la platine, ce grâce à quoi la pièce de liaison peut facilement être mise en place entre l'embase et la platine (le volant étant alors accouplé en rotation à la colonne de direction) ou enlevés (le volant étant alors désaccouplé en rotation d'avec la colonne de direction).

Un dispositif du genre précité est décrit dans le document EP-A- 0 162 986 déposé le 18 mai 1984 et publié le 4 décembre 1985, dont le contenu appartient donc à l'etat de la technique visé par l'article 54(3) et 54(4) de la CBE.

L'invention a essentiellement pour but de perfectionner ce dispositif connu de manière à en rendre la fabrication moins coûteuse et à accroître les possibilités de détrompage interdisant l'accouplement d'une pièce de liaison avec une embase et/ou une platine non spécifiquement adaptées.

A ces fins; il est proposé, conformément à l'invention, un dispositif de solidarisation ou de désolidarisation rapide, à des fins d'anti-vol, du volant et de la colonne de direction d'un véhicule automobile, caractérisé en ce qu'il comporte :
- une embase solidaire en rotation de la colonne de direction et une platine solidaire en rotation du volant, l'embase et/ou la platine présentant, dans sa face tournée vers l'autre, un évidement central dimensionné axialement pour abriter, au moins en partie, une pièce de liaison intermédiaire ;
- des premiers moyens d'accouplement en rotation, par emboîtement rapide, prévus entre l'embase et la pièce de liaison, pour accoupler en rotation ladite embase et ladite pièce de liaison et des seconds moyens d'accouplement en rotation, par emboîtement rapide, prévus entre la pièce de liaison et la platine pour accoupler en rotation ladite pièce de liaison et ladite platine, lesdits premiers et seconds moyens d'accouplement comprenant des parties apairées de formes complémentaires aptes à coopérer mutuellement et prévues respectivement sur des faces en regard de la pièce de liaison et de l'évidement, ces parties étant constituées par au moins une saillie et au moins une encoche prévues sur les faces latérales en regard de la pièce de liaison et de l'évidement, lesquelles saillie et encoche s'étendent sensiblement transversalement à l'axe du dispositif, et/ou par au moins deux paires de surfaces ou portions de surfaces inclinées l'une par rapport à l'autre et prévues sur les faces axiales en regard de la pièce de liaison et de l'évidement ;
- et des moyens d'assemblage amovibles pour maintenir assemblées axialement l'embase, la pièce de liaison et la platine, ce grâce à quoi la pièce de liaison peut facilement être mise en place entre l'embase et la platine (le volant étant alors accouplé en rotation à la colonne de direction) ou enlevée (le volant étant alors désaccouplé en rotation d'avec la colonne de direction).

Avantageusement, on prévoit que les premiers moyens d'accouplement ou les seconds moyens d'accouplement sont constitués comme indiqué précédemment et que respectivement,les seconds ou les premiers moyens d'accouplement comprennent deux surfaces à cannelures complémentaires aptes à coopérer mutuellement prévues dans deux zones en regard respectivement de la pièce de liaison et de la platine ou bien de la pièce de liaison et de l'embase.

Dans un mode de réalisation préféré, les cannelures sont rayonnantes à partir de l'axe central du dispositif.

Grâce aux dispositions qui précèdent, la fabrication des pièces composantes du dispositif conforme à l'invention est rendue sensiblement moins coûteuse que celle du dispositif antérieur, et les diverses opérations d'usinage peuvent être exécutées par des machines automatiques à programmation numérique. En outre, la pièce de liaison est usinée dans la masse et l'on écarte la nécessité de l'usinage particulier et du montage subséquent des doigts de liaison rencontrée lors de la fabrication du dispositif antérieur. Il en résulte, pour l'utilisateur, l'avantage supplémentaire d'une pièce de liaison plus compacte, et donc plus facile à glisser dans une poche de vêtement, que le précédent dispositif.

Pour accroître encore le nombre des combinaisons auxquelles on peut avoir recours pour assurer le détrompage, on prévoit que les faces latérales coopérantes en regard de la pièce de liaison et de l'évidement pratiqué dans l'embase et/ou la platine présentent, en section transversale, une forme en gradins et les saillies et encoches complémentaires sont réparties entre ces gradins.

Enfin, de façon additionnelle, on prévoit que la surface latérale de la platine est tronconique, sa conicité étant avantageusement supérieure à 15°, de préférence de l'ordre de 20°. Il devient ainsi difficile, voire même impossible, qu'un voleur mette en place une bride extérieure chevauchant l'embase et la platine pour assurer, en l'absence de la pièce de liaison, la solidarisation en rotation du volant avec la colonne de direction.

L'invention sera mieux comprise à la lecture de la description qui suit de certains modes de réalisation donnés uniquement à titre d'exemples non limitatifs, dans laquelle on se réfère aux dessins annexés sur lesquele :

- la figure 1 est une vue en coupe verticale diamétrale d'un mode de réalisation conforme à l'invention;
- la figure 2 est une vue de dessous de la platine du dispositif de la figure 1 ;
- les figures 3-5 et 11 sont des vues en coupe diamétrale montrant différents exemples de réalisation de la pièce de liaison du dispositif de la figure 1 ; et
- les figures 6 à 10 sont des vues de dessous montrant encore d'autres exemples de réalisation de la pièce de liaison du dispositif de la figure 1.

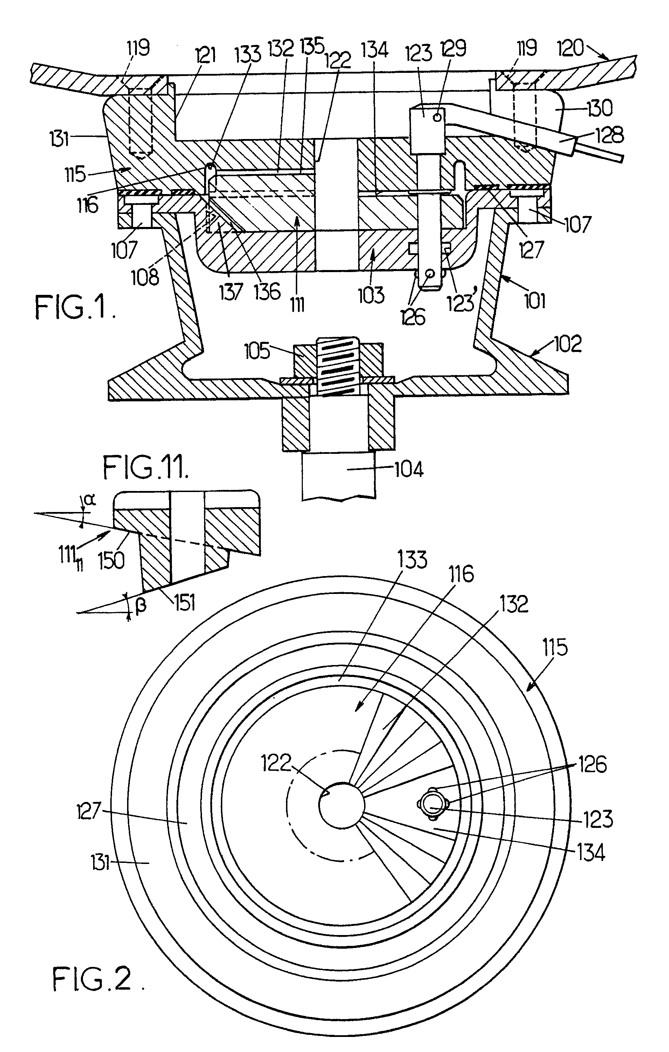

En se reportant essentiellement à la figure 1, le dispositif de l'invention comporte une embase 101 qui, avantageusement, est constituée en deux parties, savoir : un moyeu 102 et une plaque de support 103.

Le moyeu 102 est emmanché sur l'extrémité libre de la colonne de direction 104 et bloqué en rotation par tous moyens appropriés couramment utilisés à cette fin (par exemple des cannelures, non représentées) ; il est bloqué axialement par un écrou 105. Un tel moyeu sert d'adaptateur qui doit être conformé pour être monté sur la colonne de direction d'un véhicule déterminé. De tels adaptateurs sont couramment disponibles dans le commerce, par exemple pour le montage de volants dits "sport" à la place d'un volant de série.

La plaque de support 103 possède sensiblement le même diamètre que la partie supérieure du moyeu 102 et elle est munie de perçages répartis circonférentiellement en correspondance avec des perçages du moyeu 103 recevant des vis, rivets ou organes de fixation analogues 107 pour la solidarisation de la plaquette 102 au moyeu 103.

Comme visible sur la figure 1 et sur la figure 2 qui montrent une vue de dessous de la plaque 102, cette plaque présente, sur sa face supérieure, un évidement circulaire central 108.

Dans l'évidement 108 est reçue une pièce de liaison intermédiaire 111 en forme de disque circulaire relativement épais. Les parois latérales en regard de l'évidement 108 et de la pièce de liaison 111 sont conformées pour coopérer ensemble afin d'assurer un accouplement mécanique en rotation de ces deux pièces, comme cela sera explicité plus loin. De même, la surface de fond de l'évidement 108 et la surface inférieure 111 sont conformées pour coopérer ensemble comme cela sera indiqué plus loin.

Enfin, une platine 115 surmonte l'ensemble et possède, sur sa face inférieure une zone centrale 116 qui peut, elle aussi, être agencée sous forme d'un évidement circulaire central ou bien être située sensiblement dans le même plan qu'une zone annulaire périphérique entourant ladite zone centrale, zone périphérique par laquelle la platine 115 repose sur la plaque de support 103. L'évidement 108 et la zone centrale 116 définissent une chambre circulaire dans laquelle est abritée la pièce de liaison 111. Sur sa face supérieure, la platine 115 est munie de trous taraudés, répartis circonférentiellement, destinés à recevoir des vis ou rivets ou organes de fixation analogues 119 pour la fixation du volant 120 (dont seules deux branches sont représentées pour simplifier la fig. 1). Sur sa face supérieure, la platine 115 peut comporter un autre évidement circulaire central 121 pour arbriter des organes auxiliaires (par exemple contacts de l'interrupteur de commande d'un avertisseur sonore disposé sur le volant). Des moyens d'accouplement en rotation (qui seront explicités plus loin) sont prévus pour accoupler la pièce de liaison 111 et la platine 115.

La plaque 103, la pièce de liaison 111 et la platine 115 sont munies de perçages axiaux centraux définissant ensemble un passage 122 par exemple pour des fils électriques (commande de l'avertisseur).

Par ailleurs, l'assemblage axial de la plaque 103, de la pièce de liaison 111 et de la platine 115 est obtenu à l'aide d'une goupille 123 à billes rétractables fixée sur la platine 115, en position excentrée radialement. La pièce intermédiaire 111 et la plaque 103 sont munies de perçages mutuellement alignés dans lesquels est engagée la tige de la goupille, et les billes 126, en position saillante (voir fig. 1), prennent appui sur la face inférieure de la plaque de support 103. Un joint annulaire 127, comprimé entre les faces coopérantes de la plaque de support 103 et la platine 115, assure le blocage de l'ensemble.

La goupille 123 comporte un levier 128 pour la commande de l'effacement des billes 126 (autorisant le désassemblage des différentes parties 103, 111 et 115), lequel levier est articulé sur un axe 129 et s'étend radialement, à travers une gorge 130 pratiquée dans la platine 115, jusqu'à l'extérieur de cette dernière. Une telle goupille à billes rétractables peut être trouvée dans le commerce.

La désolidarisation du volant et de la colonne de direction s'effectue en levant le levier 128 pour effacer les billes 126, en tirant le volant 120 vers le haut, et en extrayant la pièce de liaison 111 que le conducteur peut conserver dans sa poche. Le volant peut alors soit être remis en place (il tourne alors fou sur la colonne de direction), soit être rangé ailleurs (la colonne de direction démunie visiblement de son volant étant une dissuasion contre l'effraction du véhicule en vue de son vol).

A titre de sécurité, le perçage prévu dans la plaque de support 103 pour le passage de la tige de la goupille 123 peut comporter un élargissement 123' ; dans le cas d'un appui défectueux des billes 126 sous la plaque 103 et d'un retrait de la goupille 123, les billes 126 s'enclencheraient dans l'élargissement 123' et empêcheraient la désolidarisation totale de la platine 115 et de l'embase 101.

On notera que la paroi latérale externe 131 de la platine 115 est tronconique, avec une conicité assez prononcée d'au moins 15° (mesurée par rapport à l'axe de la platine), et de préférence d'environ 20°. Lorsque la pièce de liaison 111 est enlevée et que la platine 115 et l'embase 101 ne sont pas solidarisées en rotation (le volant 120 tourne fou), il est alors impossible à un voleur de mettre en place un collier externe d'accouplement de la platine et de l'embase.

Pour ce qui est maintenant plus spécifiquement des moyens d'accouplement en rotation de la platine 115 et de la pièce de liaison 111, ils comprennent un ensemble de cannelures réalisées sur les deux faces en regard de la platine 115 et de la pièce de liaison 111 et aptes à s'imbriquer les unes dans les autres pour procurer l'accouplement recherché. Comme visible sur la figure 2 montrant le dessous de la platine 115, les cannelures 132 sont rayonnantes à partir de l'axe central de la platine et s'étendent sur une surface circulaire correspondant à la zone centrale 116 susmentionnée (une gorge annulaire 133, prévue pour le dégagement de l'outil de fraisage, entoure cette zone), à l'exception d'un secteur circulaire 134 où est situé le perçage de passage de la goupille 123.

La face supérieure de la pièce de liaison 111 est conformée de manière identique, avec des cannelures 135 (voir fig. 1) s'emboîtant dans les cannelures 132.

Enfin, pour ce qui est des moyens d'accouplement en rotation de la pièce de liaison 111 et de l'embase 101, ils comprennent des saillies et des encoches de formes complémentaires, emboîtées les unes dans les autres et s'étendant radialement, pratiquées notamment dans les faces latérales en regard de la pièce 111 et de l'évidement 108 dans lequel elle est emboîtée. Sur la figure 1, on peut voir une encoche 136 pratiquée dans la paroi latérale de la pièce 111 et une saillie correspondante 137 prévue sur la paroi latérale de l'évidement 108 et engagée dans l'encoche 136.

Sur la pièce de liaison 111 représentée à la figure 1, la paroi latérale est sensiblement cylindrique de révolution (nonobstant les saillies et/ou encoches) et sa face inférieure ainsi que le fond de l'évidement 108 sont plans.

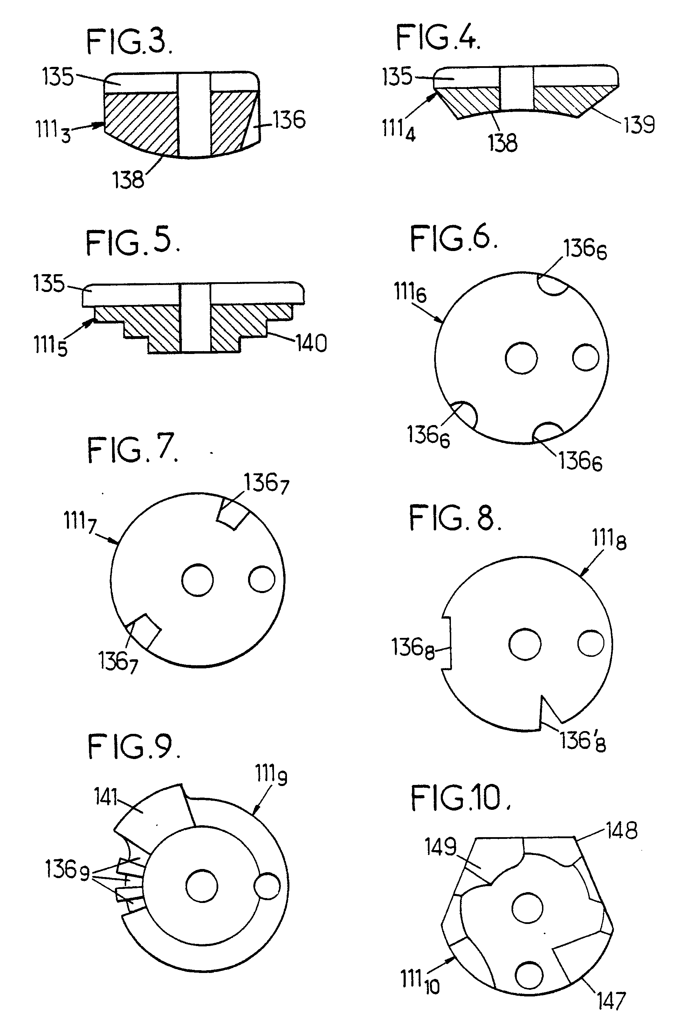

Bien entendu, de nombreuses autres dispositions sont envisageables, aussi bien en ce qui concerne les formes et/ou dispositions des saillies et encoches qu'en ce qui concerne la forme générale de la pièce 111. Les figures 3 à 10 en donnent quelques illustrations.

Sur la figure 3, la pièce $111_3$ (montrée en coupe diamétrale) possède une face inférieure 138 convexe, par exemple en forme de calotte sphérique décentrée (comme représenté) ou centrée.

Sur la figure 4, la pièce $111_4$ possède une face inférieure 138 concave, par exemple en forme de calotte sphérique centrée (comme représenté) ou décentrée. En outre, la paroi latérale 139 de la pièce 111 n'est plus cylindrique de révolution, mais présente une inclinaison régulière (paroi tronconique) ou irrégulière (comme représenté).

Sur la figure 5, la pièce de liaison $111_5$ possède une paroi latérale 140 agencée en gradins de dimensions transversales successivement décroissantes, chaque gradin pouvant être cylindrique de révolution, incliné ou de contour irrégulier.

Les figures 6 à 8 sont des vues de dessous de pièces de liaison cylindrique de révolution comportant différents types d'encoches d'accouplement : sur la figure 6, la pièce $111_6$ possède trois encoches $136_6$ en demi-cercle irrégulièrement écartées circonférentiellement ; sur la figure 7, la pièce $111_7$ possède deux encoches trapézoïdales $136_7$' ; sur la figure 8, la pièce $111_8$ possède une encoche rectangulaire $136_8$ et une encoche triangulaire $136_8$'.

La figure 9 est une vue de dessous d'une pièce de liaison $111_9$ tronconique possédant simultanément trois encoches $136_9$ et une zone saillante 141.

Enfin, la figure 10 montre une vue de dessous d'une pièce de liaison $111_{10}$ ayant un contour complexe, constitué par une portion de paroi cylindrique de révolution 147 raccordé par une portion de paroi polygonale 148. Il est, en outre, prévu un pan coupé (149 à l'exception de la zone du perçage pour la tige de la goupille) qui possède une forme complexe, faite d'un ensemble de surfaces planes et/ou curvilignes.

Bien entendu, dans les exemples indiqués avec référence aux figures 3 à 10, l'évidement 108 est conformé de manière complémentaire.

Il est également possible d'avoir recours, aux mêmes fins d'accouplement en rotation et de détrompage, à des surfaces inclinées les unes par rapport aux autres, comme représenté à la figure 11. La pièce $111_{11}$ est, dans sa partie inférieure, constituée avec deux niveaux sur le même principe que la pièce $111_{10}$ de la figure 10. L'un des niveaux est constitué par une surface 150 présentant une première inclinaison $\alpha$ par rapport à la face supérieure de cette pièce $111_{11}$, tandis que la seconde surface 151 présente une inclinaison $\beta$, les deux surfaces 150 et 151 étant, en outre, inclinées à l'opposé l'une de l'autre. Les surfaces peuvent ne pas être planes ; leur nombre peut être supérieur à deux ; il peut ne s'agir que de portions de surface inclinées.

L'embase présentant une conformation complémentaire de celle indiquée ci-dessus, le dispositif est ainsi agencé avec au moins deux paires de surfaces prévues respectivement sur les deux pièces à accoupler en rotation et inclinées l'une par rapport à l'autre, ces surfaces inclinées pouvant être combinées ou non avec des reliefs complémentaires prévus sur les faces latérales comme indiqué à propos de la pièce $111_{10}$ représentée à la fig. 10.

Les différents exemples de dispositions qui viennent d'être décrits (du reste de façon non limitative) peuvent bien entendu être combinés entre eux ; le nombre et la répartition des saillies ou encoches peuvent être modifiés ; les moyens d'accouplement de la platine 115 et de la pièce de liaison 111 et les moyens d'accouplement de la pièce de liaison 111 et de l'embase 103 peuvent être intervertis et/ou combinés entre eux.

Les dispositions ci-dessus permettent d'assurer les accouplements en rotation recherchés en même temps qu'elles assurent le détrompage des assemblages des différents organes constitutifs du dispositif de l'invention, autrement dit qu'elles empêchent la mise en coopération avec une embase 101 et une platine 115 de configuration déterminées d'une pièce de liaison 111 de configuration différente.

## Revendications

1. Dispositif de solidarisation ou de désolidarisation rapide, à des fins d'anti-vol, du volant (120) et de la colonne de direction (104) d'un véhicule automobile, comportant :
   - une embase (101) solidaire en rotation de la colonne de direction (104) et une platine (115) solidaire en rotation du volant (120), l'embase (101) et/ou la platine (115) présentant, dans sa face tournée vers l'autre, un évidement central (108) dimensionné axialement pour abriter, au moins en partie, une pièce de liaison intermédiaire (111) ;
   - des premiers moyens d'accouplement en rotation, par emboîtement rapide, prévus entre l'embase (101) et la pièce de liaison (111), pour accoupler en rotation ladite embase et ladite pièce de liaison et des seconds moyens d'accouplement en rotation, par emboîtement rapide, prévus entre la pièce de liaison (111) et la platine (115) pour accoupler en rotation ladite pièce de liaison et ladite platine, lesdits premiers et seconds moyens d'accouplement comprenant des parties apairées de formes complémentaires aptes à coopérer mutuellement et prévues respectivement sur des faces en regard de la pièce de liaison (111) et de l'évidement (108), ces parties étant constituées par au moins une saillie (137) et au moins une encoche (136) prévues sur les faces latérales en regard de la pièce de liaison et de l'évidement, lesquelles saillie et encoche s'étendent sensiblement transversalement à l'axe du dispositif, et/ou par au moins deux paires de surfaces ou portions de surfaces (150, 151) inclinées l'une par rapport à l'autre et prévues sur les faces axiales en regard de la pièce de liaison et de l'évidement ;
   - et des moyens d'assemblage amovibles (123) pour maintenir assemblées axialement l'embase, la pièce de liaison et la platine, ce grâce à quoi la pièce de liaison peut facilement être mise en place entre l'embase et la platine (le volant étant alors accouplé en rotation à la colonne de direction) ou enlevée (le volant étant alors désaccouplé en rotation d'avec la colonne de direction).

2. Dispositif selon la revendication 1, caractérisé en ce que les premiers moyens d'accouplement ou les seconds moyens d'accouplement sont constitués comme indiqué dans la revendication 1, et en ce que, respectivement, les seconds moyens d'accouplement ou les premiers moyens d'accouplement comprennent deux surfaces à cannelures complémentaires (132, 135) aptes à coopérer mutuellement prévues dans deux zones en regard respectivement de la pièce de liaison (111) et de la platine (115) ou bien de la pièce de liaison (111) et de l'embase (101).

3. Dispositif selon la revendication 2, caractérisé en ce que les cannelures (132, 135) sont rayonnantes à partir de l'axe central du dispositif.

4. Dispositif selon l'une quelconque des revendications 1 à 3, caractérisé en ce que les faces latérales coopérantes en regard de la pièce de liaison (111) et de l'évidement (108) pratiqué dans l'embase (101) et/ou la platine (115) présentent, en section transversale, une forme en gradins (140) et en ce que les saillies (137) et encoches (136) complémentaires sont réparties entre ces gradins.

5. Dispositif selon l'une quelconque des revendications 1 à 4, caractérisé en ce que la surface latérale de la platine est tronconique (139).

6. Dispositif selon la revendication 5, caractérisé en ce que la conicité de la surface latérale de la platine est supérieure à 15° par rapport à l'axe du dispositif, de préférence de l'ordre de 20°.

7. Dispositif selon l'une quelconque des revendications 1 à 6, caractérisé en ce que la face inférieure de la pièce de liaison, coopérant avec le fond de l'évidement (108), est concave et/ou convexe.

**Claims**

1. Device for the rapid mutual connection or disconnection, for anti-theft purposes, of the steering wheel (120) and steering column (104) of a motor vehicle, comprising:
   - a base (101) integral in terms of rotation with the steering column (104) and a plate (115) integral in terms of rotation with the steering wheel (120), the base (101) and/or the plate (115) having, in its face confronting the other, a central recess (108) of such axial dimension as to accommodate at least partially an intermediate connection piece (111);
   - first means for rotational coupling by rapid interlocking, which are provided between the base (101) and the connection piece (111) in order to couple the said base and the said connection piece rotationally, and second means for rotational coupling by rapid interlocking, which are provided between the connection piece (111) and the plate (115) in order to couple the said connection piece and the said plate rotationally, the said first and second coupling means comprising paired parts of complementary forms capable of interacting with one another and provided respectively on mutually confronting faces of the connection piece (111) and of the recess (108), these parts consisting of at least one projection (137) and at least one notch (136) which are provided on the mutually confronting lateral faces of the connection piece and of the recess, the said projection and notch extending substantially transversely relative to the axis of the device, and/or of at least two pairs of surfaces or surface portions (150, 151) inclined relative to one another and provided on the mutually confronting axial faces of the connection piece and of the recess;
   - and removable assembly means (123) for keeping the base, connection piece and plate assembled axially, as a result of which the connection piece can easily be installed between the base and the plate (the steering wheel then being coupled rotationally to the steering column) or removed (the steering wheel then being uncoupled rotationally from the steering column).

2. Device according to Claim 1, characterised in that the first coupling means or the second coupling means are formed as mentioned in Claim 1, and in that the second coupling means or the first coupling means respectively comprise two surfaces with complementary splines (132, 135) capable of interacting with one another and provided respectively in two mutually confronting zones of the connection piece (111) and of the plate (115) or of the connection piece (111) and of the base (101).

3. Device according to Claim 2, characterised in that the splines (132, 135) radiate from the central axis of the device.

4. Device according to any one of Claims 1 to 3, characterised in that the mutually confronting interacting lateral faces of the connection piece (111) and of the recess (108) made in the base (101) and/or the plate (115) are shaped in the form of steps (140), as seen in cross-section, and in that the complementary projections (137) and notches (136) are distributed between these steps.

5. Device according to any one of Claims 1 to 4, characterised in that the lateral surface of the plate is frustoconical (139).

6. Device according to Claim 5, characterised in that the conicity of the lateral surface of the plate is greater than 15° relative to the axis of the device and preferably of the order of 20°.

7. Device according to any one of Claims 1 to 6, characterised in that the lower face of the connection piece interacting with the bottom of the recess (108) is concave and/or convex.

**Patentansprüche**

1. Vorrichtung zum schnellen Verbinden oder Lösen des Lenkrades und der Lenksäule eines Kraftfahrzeuges zwecks Diebstahlsicherung, die aus folgendem besteht:

    - einem Ansatz (101) der zur Rotation kraftschlüssig mit der Lenksäule (104) verbunden ist und einer Platte (115) die zur Rotation kraftschlüssig mit dem Lenkrad (120) verbunden ist, wobei der Ansatz (101) und/oder die Platte (115), die in ihrer/seiner einen Seite, die der Seite des/der jeweils anderen gegenüberliegt,eine mittlere Aussparung (108) aufweist, die in axialer Richtung bemessen ist, um wenigstens einen Teil, ein Verbindungszwischenstück (111) zu schützen;
    - ersten Mitteln der Verbindung zum schnellen Ineinandergreifen zur Rotation, die zwischen dem Ansatz (101) und dem Verbindungsstück (111) vorgesehen sind, um zur Rotation den Ansatz und das Verbindungsstück zu verkuppeln,und zweiten Mitteln der Verbindung zum schnellen Ineinandergreifen zur Rotation, die zwischen dem Verbindungsstück (111) und der Platte (115) vorgesehen sind, um zur Rotation das Verbindungsstück und die Platte zu verkuppeln, wobei die ersten und zweiten Mittel der Verbindung umfassen zueinander komplementäre Formen aufweisende, gepaarte Teile, die, zum wechselseitigen Zusammenwirken fähig sind und **die** jeweils auf den Flächen im Hinblick auf das Verbindungsstück (111) und auf die Aussparung (108) vorgesehen sind, wobei diese Teile aus wenigstens einem Kragen (137) und wenigstens einer Kerbe (136) bestehen, die auf den Seitenflächen im Hinblick auf das Verbindungsstück und die Aussparung vorgesehen sind, wobei der Kragen und die Kerbe sich etwa quer zur Achse der Vorrichtung erstrecken,und/oder wenigstens zwei Paaren der Oberfläche oder Teilen der Oberflächen (150,151), die zueinander geneigt sind und die auf die axialen Vorderseiten im Hinblick auf das Verbindungsstück und die Aussparung vorgesehen sind;
    - und aus verstellbaren Mitteln der Verbindung (123), um die axiale Verbindung des Ansatzes, des Verbindungsstückes und der Platte aufrechtzuerhalten, aufgrund dessen das Verbindungsstück leicht zwischen dem Ansatz und der Platte eingesetzt (das Lenkrad ist nun zu der Rotation mit der Lenksäule gekoppelt) oder herausgenommen (das, Lenkrad ist nun von der Lenksäule abgekoppelt) werden kann.

2. Vorrichtung nach Anspruch 1, dadurch gekennzeichnet, daß die ersten Mittel der Verbindung oder die zweiten Mittel der Verbindung nach Anspruch 1 gestaltet sind, und dadurch, daß die zweiten Mittel der Verbindung oder die ersten Mittel der Verbindung zwei sich ergänzende mit Rillen versehene Oberflächen (132,135) umfassen, die zum wechselseitigen Zusammenwirken fähig sind und die in zwei Bereichen im Hinblick auf das Verbindungsstück (111) und die Platte (115) oder das Verbindungsstück (111) und den Ansatz (101) vorgesehen sind.

3. Vorrichtung nach Anspruch 2, dadurch gekennzeichnet, daß die Rillen (132,135) strahlenförmig von der mittleren Achse der Vorrichtung ausgehen.

4. Vorrichtung nach einem der vorangehenden Ansprüche 1 bis 3, dadurch gekennzeichnet, daß die mitwirkenden Seitenflächen im Hinblick auf das Verbindungsstück (111) und die Ausnehmung (108), die in dem Ansatz (101) und/oder die Platte (115) angebrachtist, im transversalen Abschnitt die Form einer Stufe (140) hat und dadurch, daß die Kragen (137) und die komplementären Kerben (136) zwischen den Stufen verteilt sind.

5. Vorrichtung nach einem der vorangehenden Ansprüche 1 bis 4, dadurch gekennzeichnet, daß die Seitenfläche der Platte (139) kegelstumpfartig ausgebildet ist.

6. Vorrichtung nach Anspruch 5, dadurch gekennzeichnet, daß die Verjüngung der Seitenfläche der Platte größer als 15° bezogen auf die Achse der Vorrichtung ist und vorzugsweise 20° beträgt.

7. Vorrichtung nach einem der vorangehenden Ansprüche 1 bis 6, dadurch gekennzeichnet, daß die untere Seite des Verbindungsstückes, die mit dem Boden der Aussparung (108) mitwirkt, konkav und/oder konvex ist.

FIG.1.

FIG.11.

FIG.2.

FIG.3.

FIG.4.

FIG.5.

FIG.6.

FIG.7.

FIG.8.

FIG.9.

FIG.10.